# EUROPEAN PATENT APPLICATION

(11) **EP 2 309 739 A2**
(43) Date of publication of application: **13.04.2011**
(21) Application number: 10186962.6
(22) Date of filing: 08.10.2010
(51) Int. Cl.: H04N 7/14, H04N 7/15

(54) **Videophone system**

(30) Priority: 09.10.2009 JP 2009234929
(71) Applicant: Funai Electric Co., Ltd., Daito-shi, Osaka 574-0013 (JP)
(72) Inventor: Ishimoto, Kouichi, Daito-shi, Osaka 574-0013 (JP)
(74) Representative: Grünecker, Kinkeldey, Stockmair & Schwanhäusser Anwaltssozietät

(57) **Abstract**

In this videophone system, a second control portion (221a) of a second telephone communication apparatus (200) is formed to transmit an image corresponding to an image request signal to a first telephone communication apparatus after a phone call to the first telephone communication apparatus is terminated when receiving the image request signal transmitted from the first telephone communication apparatus during the phone call.

## Description

### BACKGROUND OF THE INVENTION

### Field of the Invention

The present invention relates to a videophone system, and more particularly, it relates to a videophone system transmitting an image to the other party during a phone call.

### Description of the Background Art

A videophone transmitting an image to the other party during a phone call is known in general, as disclosed in each of Japanese Patent Laying-Open Nos. 2005-277884 and 8-149436 (1996), for example.

Japanese Patent Laying-Open No. 2005-277884 discloses a videophone capable of transmitting an image to be displayed on a display portion of a videophone of the other party during a phone call. This videophone selects either an acquired image (still picture) of the user thereof to be displayed on the display portion of the other party during the phone call or an image selected by the user from among character images and live images and transmits the selected image to the other party during the phone call. However, Japanese Patent Laying-Open No. 2005-277884 describes no structure of transmitting a requested image to the videophone of the other party when receiving an image transmission request from the videophone of the other party.

Japanese Patent Laying-Open No. 8-149436 discloses a videophone transmitting voice data after transmitting a prescribed quantity of an image to be displayed on a display portion of a videophone of the other party when transmitting the image to be displayed on the display portion of the other party and the voice data during a phone call. However, Japanese Patent Laying-Open No. 8-149436 describes no structure of transmitting a requested image to the videophone of the other party when receiving an image transmission request from the videophone of the other party.

As hereinabove described, each of Japanese Patent Laying-Open Nos. 2005-277884 and 8-149436 describes no structure of transmitting a requested image to the videophone of the other party when receiving an image transmission request from the videophone of the other party, and hence it is conceivable that the videophone cannot transmit the image requested by the other party. Even if the videophone disclosed in each of Japanese Patent Laying-Open Nos. 2005-277884 and 8-149436 has a structure capable of transmitting an image requested by the other party, the same conceivably transmits the image requested by the videophone of the other party during the phone call in parallel with the processing of transmitting the image to be displayed on the display portion of the videophone of the other party during the phone call. In this case, the videophone must further transmit the image requested by the other party while transmitting the voice data and the image to be displayed on the display portion of the other party during the phone call, and hence the quantity of information transmitted during the phone call may be so disadvantageously increased as to cause inconvenience in the processing of the videophone during the phone call.

### SUMMARY OF THE INVENTION

The present invention has been proposed in order to solve the aforementioned problem, and an object of the present invention is to provide a videophone system capable of transmitting an image requested by the other party while causing no inconvenience in processing of the videophone during a phone call.

A videophone system according to an aspect of the present invention includes a first telephone communication apparatus including a first imaging portion, a first communication portion, a first display portion and a first control portion and having a videophone function enabling a user to make a phone call while displaying an image of the other party on the first display portion and a second telephone communication apparatus including a second imaging portion, a second communication portion, a second display portion and a second control portion and having a videophone function enabling a user to make a phone call while displaying an image of the other party on the second display portion. The first control portion of the first telephone communication apparatus is formed to transmit an image request signal requesting the second telephone communication apparatus to transmit an image to the second telephone communication apparatus through the first communication portion on the basis of an operation of the user. The second control portion of the second telephone communication apparatus is formed to transmit the image to be displayed on the first display portion of the first telephone communication apparatus through the second communication portion during a phone call to the first telephone communication apparatus, and to transmit the image corresponding to the image request signal after the phone call to the first telephone communication apparatus is terminated when the second communication portion receives the image request signal transmitted from the first telephone communication apparatus during the phone call.

In the videophone system according to the aspect of the present invention, as hereinabove described, the second telephone communication apparatus is provided with the second control portion transmitting the image corresponding to the image request signal to the first telephone communication apparatus after the phone call to the first telephone communication apparatus is terminated when the second communication portion receives the image request signal transmitted from the first telephone communication apparatus during the phone call so that the second control portion transmits the image requested by the other party (first telephone communication apparatus) after the phone call to the other party is terminated, whereby the second control portion can transmit the image requested by the other party without increasing the quantity of information transmitted during the phone call. Consequently, the second control portion can transmit the image requested by the other party while suppressing inconvenience caused in videophone processing during the phone call.

In the aforementioned videophone system according to the aspect, the second telephone communication apparatus preferably further includes a resolution conversion portion converting resolution of an image from high resolution to low resolution, and the second control portion of the second telephone communication apparatus is preferably formed to transmit a low-resolution image converted to low resolution by the resolution conversion portion to the first telephone communication apparatus during the phone call to the first telephone communication apparatus, and to transmit a high-resolution image not yet converted by the resolution conversion portion to the first telephone communication apparatus after the phone call to the first telephone communication apparatus is terminated when receiving the image request signal. According to this structure, the second control portion can transmit the image requested by the other party as the high-resolution image after the phone call is terminated, while reducing the quantity of transmitted information by transmitting the low-resolution image during the phone call. Thus, the second control portion can transmit the image requested by the other party as the high-resolution image of high picture quality, while suppressing inconvenience caused in the videophone processing during the phone call.

In this case, the second control portion of the second telephone communication apparatus is preferably formed to convert a high-resolution image acquired by the second imaging portion of the second telephone communication apparatus to a low-resolution image by the resolution conversion portion and to transmit the low-resolution image to the first telephone communication apparatus during the phone call to the first telephone communication apparatus, and to transmit a high-resolution image, corresponding to the image request signal, acquired by the second imaging portion to the first telephone communication apparatus after the phone call to the first telephone communication apparatus is terminated when receiving the image request signal with respect to an image acquired by the second imaging portion during the phone call. According to this structure, the second control portion can transmit the image, acquired by the second imaging portion, requested by the other party as the high-resolution image of high picture quality while further suppressing inconvenience caused in the videophone processing during the phone call.

In the aforementioned structure having the second telephone communication apparatus including the resolution conversion portion, the second telephone communication apparatus preferably further includes a storage portion storing a high-resolution image, and the second control portion of the second telephone communication apparatus is preferably formed to transmit the high-resolution image stored in the storage portion to the first telephone communication apparatus after the phone call to the first telephone communication apparatus is terminated when receiving the image request signal. According to this structure, the second control portion can easily transmit the high-resolution image of high picture quality to the other party by reading the high-resolution image requested by the other party from the storage portion.

In the aforementioned structure having the second telephone communication apparatus including the storage portion, the storage portion of the second telephone communication apparatus stores the high-resolution image, corresponding to the image request signal, acquired by the second imaging portion, and the second control portion of the second telephone communication apparatus is preferably formed to transmit the high-resolution image acquired by the second imaging portion and stored in the storage portion to the first telephone communication apparatus after the phone call to the first telephone communication apparatus is terminated when receiving the image request signal with respect to an image acquired by the second imaging portion from the first telephone communication apparatus during the phone call to the first telephone communication apparatus. According to this structure, the second control portion can easily transmit the high-resolution image of high picture quality acquired by the second imaging portion to the other party by reading the high-resolution image, acquired by the second imaging portion, requested by the other party from the storage portion.

In the aforementioned structure having the second telephone communication apparatus including the storage portion, the storage portion of the second telephone communication apparatus preferably stores an open image consisting of a high-resolution image to be opened to the first telephone communication apparatus, and the second control portion of the second telephone communication apparatus is preferably formed to convert the open image consisting of the high-resolution image stored in the storage portion to a low-resolution image by the resolution conversion portion and to transmit the low-resolution image to the first telephone communication apparatus during the phone call to the first telephone communication apparatus in response to a read request for the open image, and to transmit the open image consisting of the high-resolution image, corresponding to the image request signal, stored in the storage portion to the first telephone communication apparatus after the phone call to the first telephone communication apparatus is terminated when receiving the image request signal from the first telephone communication apparatus call with respect at least part of the read open image during the phone call. According to this structure, the second control portion can easily transmit the open image consisting of the high-resolution image of high picture quality to the other party by reading the open image, consisting of the high-resolution image, requested by the other party from the storage portion while suppressing increase in the quantity of transmitted information by transmitting the open image converted to the low-resolution image during the phone call.

In this case, the first display portion is preferably formed to list the open image, converted to the low-resolution image, transmitted from the second telephone communication apparatus. According to this structure, the first display portion lists the open image converted to the low-resolution image, whereby the open image converted to the low-resolution image can be easily observed.

In the aforementioned videophone system according to the aspect, at least either the first telephone communication apparatus or the second telephone communication apparatus preferably includes a display range acceptance portion and an image processing portion, the display range acceptance portion is preferably formed to accept limit information for a display range of the image displayed on the corresponding first or second display portion, the image processing portion is preferably formed to process an image acquired by the first imaging portion or the second imaging portion so that the image is displayed in the display range accepted by the display range acceptance portion, and the first control portion or the second control portion is preferably formed to transmit the image processed by the image processing portion to the other party during the phone call in at least the first telephone communication apparatus or the second telephone communication apparatus including the display range acceptance portion and the image processing portion. According to this structure, the first control portion or the second control portion transmits the image to the other party in the state where the display range thereof is limited, whereby the user of the first or second telephone communication apparatus can keep an inconvenient portion, not to be seen by the other party, of the image acquired by the corresponding imaging portion unobserved.

In this case, the display range acceptance portion is preferably constituted of the first display portion or the second display portion having a touch panel function and formed to accept the limit information for the display range through the touch panel function. According to this structure, the user can easily specify the display range through the easily operable touch panel function.

In the aforementioned structure having at least the first telephone communication apparatus or the second telephone communication apparatus including the display range acceptance portion, the display range acceptance portion is preferably formed to accept the limit information for the display range responsive to a person on the other end of the phone, and the first display portion or the second display portion is preferably formed to transmit an image of the display range, accepted by the display range acceptance portion, responsive to the person on the other end of the phone to the other party during the phone call in at least the first telephone communication apparatus or the second telephone communication apparatus including the display range acceptance portion and the image processing portion. According to this structure, the user can properly keep an inconvenient portion, not to be seen by the other party, of the image acquired by the corresponding imaging portion unobserved, also when the inconvenient portion not to be seen varies with the person on the other end of the phone.

In the aforementioned videophone system according to the aspect, the first control portion of the first telephone communication apparatus is preferably formed to transmit a transmission available/unavailable signal, inquiring of the user of the second telephone communication apparatus about availability/unavailability of transmission of an image to the first telephone communication apparatus, to the second telephone communication apparatus through the first communication portion when transmitting the image request signal to the second telephone communication apparatus on the basis of the operation of the user of the first telephone communication apparatus, the second telephone communication apparatus preferably further includes an authorization acceptance portion accepting authorization information authorizing the transmission of the image from the user of the second telephone communication apparatus when the second communication portion receives the transmission available/unavailable signal transmitted from the first telephone communication apparatus, and the second control portion of the second telephone communication apparatus is preferably formed not to transmit the image corresponding to the image request signal to the first telephone communication apparatus when the authorization acceptance portion does not accept the authorization information from the user. According to this structure, the second control portion does not transmit the image requested by the other party to the other party unless the user of the second telephone communication apparatus authorizes the transmission of the image, whereby the second control portion can be prevented from transmitting the image requested by the other party against the will of the user of the second telephone communication apparatus if he/she does not wish to transmit the image requested by the other party to the other party.

In the aforementioned videophone system according to the aspect, at least either the first telephone communication apparatus or the second telephone communication apparatus preferably further includes an analog telephone communication portion so formed that an analog telephone is connectable thereto while transmitting/receiving a voice signal to/from the connected analog telephone, and the first control portion or the second control portion is preferably formed to synchronize the timing of the voice signal input through the analog telephone with that of an image, corresponding to the voice signal, acquired by the first imaging portion or the second imaging portion in at least the first telephone communication apparatus or the second telephone communication apparatus including the analog telephone communication portion. According to this structure, the user of the first or second telephone communication apparatus can make a videophone call to the other party in a state where the voice and the image are in timing synchronization with each other also when employing the analog telephone for the videophone call.

The aforementioned videophone system according to the aspect is preferably so formed that the first control portion transmits a transmission request signal to the second telephone communication apparatus through the first communication portion when the second control portion transmits the image corresponding to the image request signal to the first telephone communication apparatus after the phone call to the first telephone communication apparatus is terminated and the second control portion transmits the image corresponding to the image request signal to the first telephone communication apparatus through the second communication portion after the second telephone communication apparatus receives the transmission request signal. According to this structure, the second control portion can reliably transmit the image corresponding to the image request signal also after the phone call is terminated.

In this case, the first control portion is preferably formed to determine whether or not the image, corresponding to the image request signal, transmitted from the second telephone communication apparatus is completely received and to terminate the communication with the second telephone communication apparatus when the image request signal is completely received. According to this structure, the first control portion can terminate the communication after entirely receiving the requested image.

In the aforementioned videophone system according to the aspect, the first telephone communication apparatus and the second telephone communication apparatus are preferably digital photo frames. According to this structure, photo frames each capable of transmitting an image requested by the other party while suppressing inconvenience caused in the videophone processing during the phone call can be provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic diagram showing the overall structure of a videophone system according to a first embodiment of the present invention;
Fig. 2 is a block diagram showing the structure of a digital photo frame provided in the videophone system according to the first embodiment of the present invention;
Fig. 3 is a flow chart for illustrating videophone call processing of the videophone system according to the first embodiment of the present invention;
Fig. 4 is a flow chart for illustrating display range set processing of the videophone system according to the first embodiment of the present invention;
Fig. 5 illustrates a display screen for the display range set processing of the videophone system according to the first embodiment of the present invention;
Fig. 6 illustrates a frame for the display range set processing of the videophone system according to the first embodiment of the present invention;
Fig. 7 is a flow chart for illustrating acquired image transmission processing of the videophone system according to the first embodiment of the present invention;
Fig. 8 is a flow chart for illustrating videophone start processing at steps S21 and S41 shown in Fig. 7;
Fig. 9 illustrates a display screen for the videophone start processing at the steps S21 and S41 shown in Fig. 7;
Fig. 10 is a flow chart for illustrating open image transmission processing of a videophone system according to a second embodiment of the present invention;
Fig. 11 illustrates open folder read buttons for the open image transmission processing of the videophone system according to the second embodiment of the present invention; and
Fig. 12 illustrates thumbnail images for the open image transmission processing of the videophone system according to the second embodiment of the present invention.

### DESCRIPTION OF THE PREFERRED EMBODIMENTS

Embodiments of the present invention are now described with reference to the drawings.

### (First Embodiment)

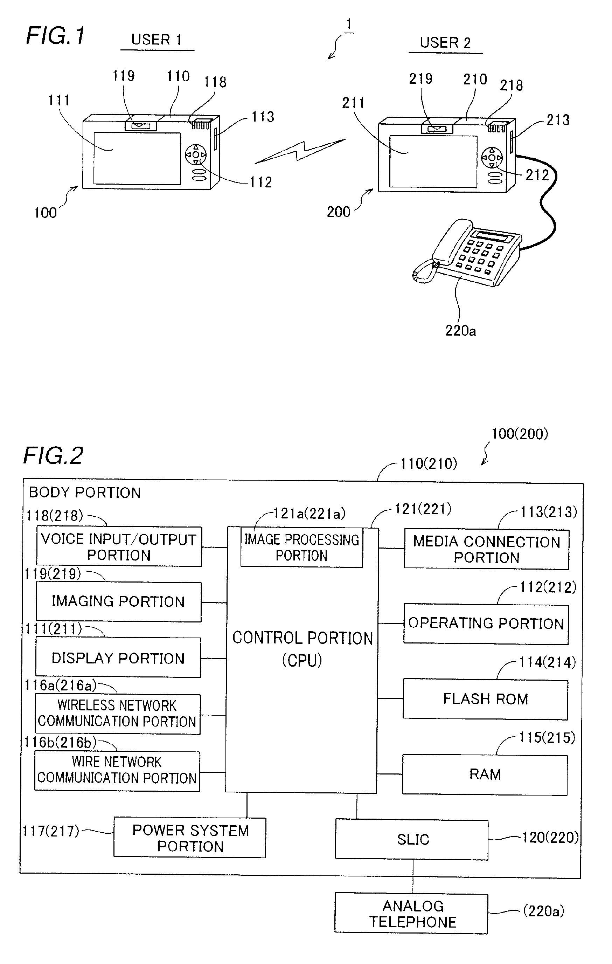

First, the structure of a videophone system 1 according to a first embodiment of the present invention is described with reference to Figs. 1 and 2.

The videophone system 1 according to the first embodiment of the present invention is constituted of digital photo frames 100 and 200 of users 1 and 2, as shown in Fig. 1. The digital photo frames 100 and 200 have similar structures, and are both formed to function as videophones. The digital photo frames 100 and 200 are examples of the "first telephone communication apparatus" and the "second telephone communication apparatus" in the present invention respectively.

As shown in Fig. 1, the digital photo frame 100 (200) includes a body portion 110 (210) having a rectangular shape in front elevational view. A rectangular display portion 111 (211) is provided on the front surface of the body portion 110 (210). An operating portion 112 (212) is arranged on the front surface of the body portion 110 (210) adjacently to the display portion 111 (211). A media connection portion 113 (213) is provided on a side surface of the body portion 110 (210). As shown in Fig. 2, the body portion 110 (210) is provided therein with a flash ROM 114 (214), a RAM 115 (215), a wireless network communication portion 116a (216a), a wire network communication portion 116b (216b), a power system portion 117 (217), a voice input/output portion 118 (218), an imaging portion 119 (219), an SLIC (subscriber line interface circuit) 120 (220) and a control portion (CPU) 121 (221).

The display portion 111 (211) consists of a liquid crystal display, and is formed to display an image received from the other party during a phone call. The display portion 111 (211) is formed to be capable of displaying a digital image in a medium (not shown) connected to the media connection portion 113 (213), and has a touch panel function. Further, the display portion 111 (211) displays number buttons for inputting a telephone number on the basis of an instruction of the user 1 (2), an off-hook button used by the user 1 (2) for taking the phone off the hook and an on-hook button used by the user 1 (2) for hanging up the phone. In addition, the display portion 111 (211) is formed to be capable of displaying set screens for setting the digital photo frame 100 (200) in various manners. Further, the display portion 111 (211) is formed to be capable of displaying images in different modes such as a fixed display mode of displaying one image (photographic image) or a slide show display mode of displaying a plurality of images (photographic images) while switching the same at a prescribed interval when the digital photo frame 100 (200) does not function as the videophone (functions as the digital photo frame). The display portions 111 and 211 are examples of the "first display portion" and the "second display portion" in the present invention respectively.

The operating portion 112 (212) is so provided that the user 1 (2) selects and decides displayed items on various screens displayed on the display portion 111 (211).

The media connection portion 113 (213) is formed to be responsive to various media such as an SD (Secure Digital) Memory Card (registered trademark), an xD Picture Card (registered trade mark), an CF (Compact Flash) Card (registered trademark) and a Memory Stick (registered trademark).

The flash ROM 114 (214) consists of a rewritable nonvolatile memory, and is capable of storing image data in various media read through the media connection portion 113 (213). Further, the flash ROM 114 (214) is formed to be capable of storing high-resolution images of high picture quality formed by the imaging portion 119 (219), as described later. The flash ROM 214 is an example of the "storage portion" in the present invention.

The RAM 115 (215) consists of a volatile memory, and is utilized as a working area of the control portion 121 (221).

The wireless network communication portion 116a (216a) is provided for making wireless communication with another communication apparatus. The body portion 110 (210) is connected to the communication apparatus of the other party through the wireless network communication portion 116a (216a), so that the user 1 (2) can make a phone call. The wireless network communication portions 116a and 216a are examples of the "first communication portion" and the "second communication portion" in the present invention respectively.

The wire network communication portion 116b (216b) is provided for making wireless communication with another communication apparatus. According to the first embodiment, the body portion 110 (210) is connected to the digital photo frame 200 (100) of the other party through the wireless network communication portion 116a (216a), and the wire network communication portion 116b (216b) is not in use.

The power system portion 117 (217) has a function of supplying power to the respective portions of the body portion 110 (210). More specifically, the power system portion 117 (217) is switched between a state (power-off state) of supplying no power to the respective portions of the body portion 110 (210) and a state (power-on state) of supplying power to the overall body portion 110 (210) by an instruction from the control portion 121 (221).

The voice input/output portion 118 (218) has a microphone function and a speaker function, and is formed to receive the voice of the user 1 (2) and to output the voice of the other party to the user 1 (2) when the digital photo frame 100 (200) functions as the videophone. Further, the voice input/output portion 118 (218) is formed to operate when the off-hook button of the display portion 111 (211) is pressed and to stop the operation when the on-hook button is pressed on the basis of an instruction from the control portion 121 (221). Thus, the user 1 (2) can make a phone call through the microphone function and the speaker function of the voice input/output portion 118 (218), without employing a receiver.

The imaging portion 119 (219) is provided for acquiring an image displayed on the display portion 211 (111) of the other party during the phone call. The imaging portion 119 (219) is formed to be capable of acquiring the image in high resolution. The imaging portions 119 and 219 are examples of the "first imaging portion" and the "second imaging portion" in the present invention respectively.

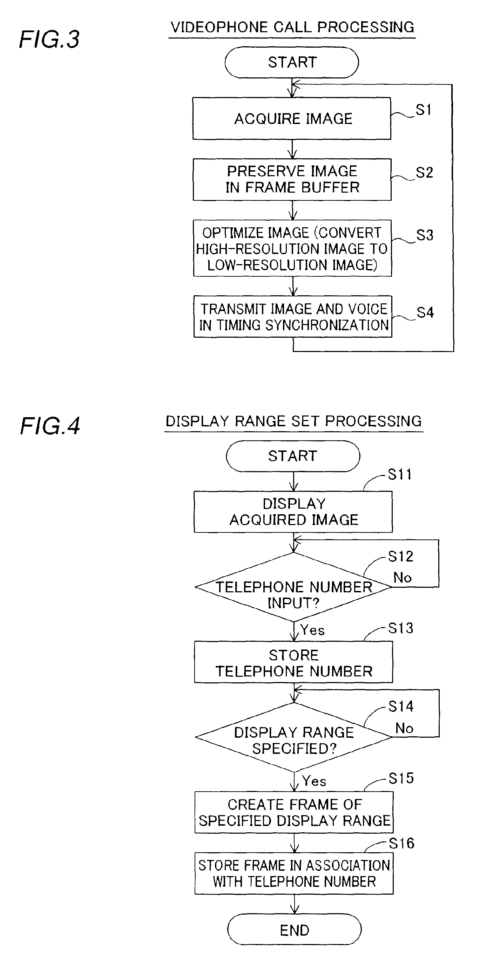

The SLIC 120 (220) is so formed that an analog telephone is connectable thereto, and formed to convert a digital voice signal received from the other party to an analog voice signal and to convert an analog voice signal received through the connected analog telephone to a digital voice signal. Thus, the user 1 (2) can make a videophone call with the analog telephone. The digital photo frame 100 (200) enters an off-hook state when the user 1 (2) picks up the receiver of the analog telephone, and enters an on-hook state when the user 1 (2) puts down the receiver of the analog telephone. When the analog telephone is employed, the aforementioned voice input/output portion 118 (218) does not operate, but the voice of the user 1 (2) is input/output through the receiver of the analog telephone. According to the first embodiment, an analog telephone 220a is connected to only the digital photo frame 200 of the user 2, as shown in Figs. 1 and 3. The SLICs 120 and 220 are examples of the "analog telephone communication portion" in the present invention.

The control portion 121 (221) consists of a CPU, and is formed to control operations of the respective portions of the body portion 110 (210) by running computer programs (not shown). The control portion 121 (221) includes an image processing portion 121a (221a) performing image processing. The image processing portion 121a (221a) has a function of converting images from high resolution to low resolution and a function of overlapping a frame on a prescribed image, as described later. The image processing portion 221a is an example of the "resolution conversion portion" or the "image processing portion" in the present invention. The control portion 121 (221) is formed to execute videophone call processing, display range set processing and acquired image transmission processing as described later, in addition to processing such as that of the slide show display mode as the digital photo frame 100 (200). The control portions 121 and 221 are examples of the "first control portion" and the "second control portion" in the present invention respectively.

When the digital photo frame 100 (200) according to the first embodiment functions as the videophone, the control portion 121 (221) continuously executes the videophone call processing during the videophone call. The control portion 121 (221) sets the display range of the image acquired by the imaging portion 119 (219) and displayed on the display portion 211 (111) of the other party during the phone call through the display range set processing. Further, the control portion 121 (221) transmits an image, requested by the other party, among low-resolution images of low picture quality acquired by the imaging portion 119 (219) and displayed on the display portion 211 (111) of the other party during the phone call in high resolution of high picture quality through the acquired image transmission processing.

The videophone call processing of the videophone system 1 according to the first embodiment of the present invention is now described with reference to Fig. 3. The control portions 121 and 221 of the digital photo frames 100 and 200 similarly execute the videophone call processing, and hence the processing executed by the control portion 121 of the digital photo frame 100 is described, while redundant description is not repeated as to the processing executed by the control portion 221 of the digital photo frame 200.

When videophone call processing is started in videophone start processing described later, the control portion 121 controls the imaging portion 119 to acquire the image on the side of the digital photo frame 100 at a step S1, and temporarily preserves the image acquired by the imaging portion 119 in a frame buffer (not shown). The frame buffer is a memory temporarily storing raster data of the acquired image. Then, the control portion 121 optimizes the preserved image at a step S3. More specifically, the control portion 121 converts the high-resolution image of high picture quality acquired by the imaging portion 119 to a low-resolution image of low picture quality through the image processing portion 121a. Thus, the image size (data volume) is reduced, and hence the quantity of information transmitted to the other party during the phone call is reduced. Then, the control portion 121 transmits a voice signal received from the user 1 and the optimized image to the other party (digital photo frame 200) in timing synchronization through the wireless network communication portion 116a at a step S4. When the user 2 connects the analog telephone 220a to the digital photo frame 200 and makes a phone call through the analog telephone 220a, the control portion 221 converts an analog voice signal received from the user 2 to a digital voice signal through the SLIC 220 and thereafter transmits the converted voice signal and an optimized image to the other party in timing synchronization through the wireless network communication portion 216a.

The display range set processing of the videophone system 1 according to the first embodiment of the present invention is now described with reference to Figs. 4 to 6. The control portions 121 and 221 of the digital photo frames 100 and 200 similarly execute the display range set processing, and hence the processing executed by the control portion 121 of the digital photo frame 100 is described, while redundant description is not repeated as to the processing executed by the control portion 221 of the digital photo frame 200.

When the user 1 selects an item of display range setting on a menu screen (not shown), the control portion 121 controls the display portion 111 to display the image acquired by the imaging portion 119 at a step S11. In other words, the display portion 111 of the digital photo frame 100 displays the image acquired by the imaging portion 119 of the digital photo frame 100. Thus, the user 1 can confirm his/her image acquired by the imaging portion 119 on the display portion 111. Thereafter the control portion 121 determines whether or not the user 1 has input a telephone number at a step S12, and repeats this determination until the user 1 inputs the telephone number. According to the first embodiment, the user 1 can set a display range responsive to a person on the other end of the phone, and must first input the telephone number for identifying the person on the other end of the phone. When the user 1 inputs the telephone number, the control portion 121 controls the flash ROM 114 to store the input telephone number at a step S13.

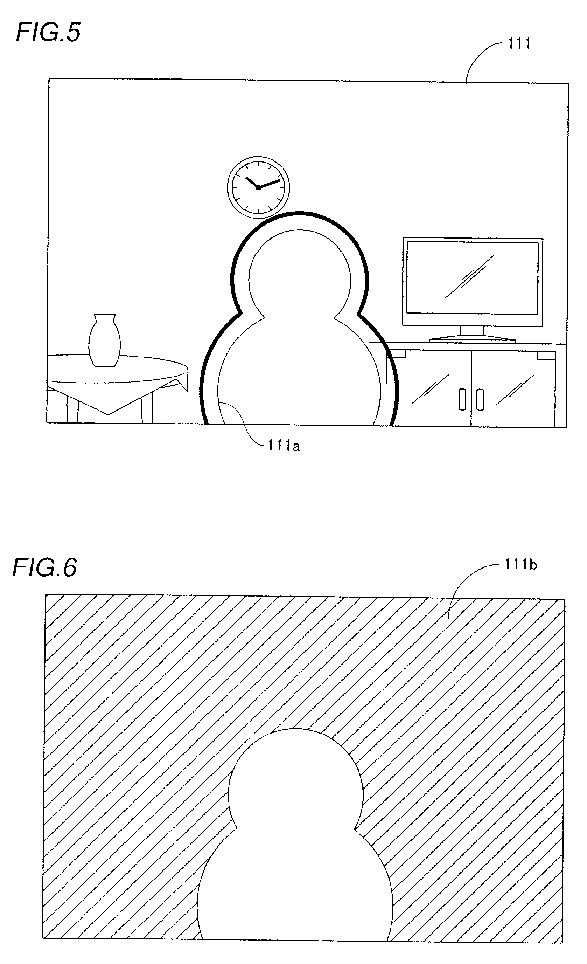

Then, the control portion 121 determines whether or not the user 1 has specified the display range. The user 1 can specify the display range through the touch panel function of the display portion 111, on which his/her image is displayed. When the user 1 wishes to set the display range so that the display portion 211 of the other party displays only his/her image without displaying the background, for example, he/she can specify the desired display range by tracing the surface of the display portion 111 along the contour 111a of his/her image displayed on the display portion 111 with his/her finger, as shown in Fig. 5. Fig. 5 shows the display range specified by the user 1 with a thick line. The display portions 111 and 211 having the touch panel function are examples of the "display range acceptance portion" in the present invention.

The control portion 121 repeats the determination at the step S14 until the user 1 specifies the display range. When the user 1 specifies the display range, the control portion 121 creates a frame 111b of the specified display range at a step S15. At this time, the control portion 121 creates the frame 111b for covering up portions other than the display range specified by the user 1, as shown in Fig. 6. More specifically, the control portion 121 creates the frame 111b in which the portions other than the specified display range are filled in a halftone manner. Thereafter the control portion 121 controls the flash ROM 114 to store the created frame 111b in association with the input telephone number at a step S16. Thus, the user 1 can set the display range responsive to the person on the other end of the phone.

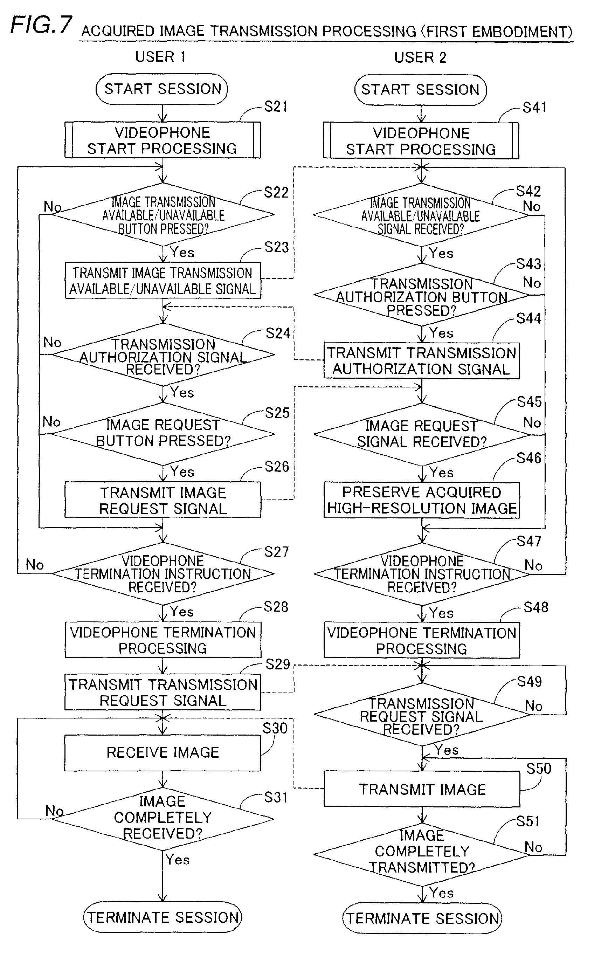

The acquired image transmission processing of the videophone system 1 according to the first embodiment of the present invention is now described with reference to Figs. 7 to 9. In the following description, it is assumed that the user 1 requests an acquired image and the digital photo frame 200 of the user 2 transmits the acquired image requested by the user 1 to the digital photo frame 100 of the user 1. Also when the digital photo frame 100 of the user 1 transmits an acquired image requested by the user 2 to the digital photo frame 200 of the user 2, processing similar to that described below is performed.

When the user 1 or 2 makes a phone call to the user 2 or 1, a communication session between the digital photo frames 100 and 200 is started. Then, the control portions 121 and 221 of the digital photo frames 100 and 200 of the users 1 and 2 execute the videophone start processing at steps S21 and S41 respectively.

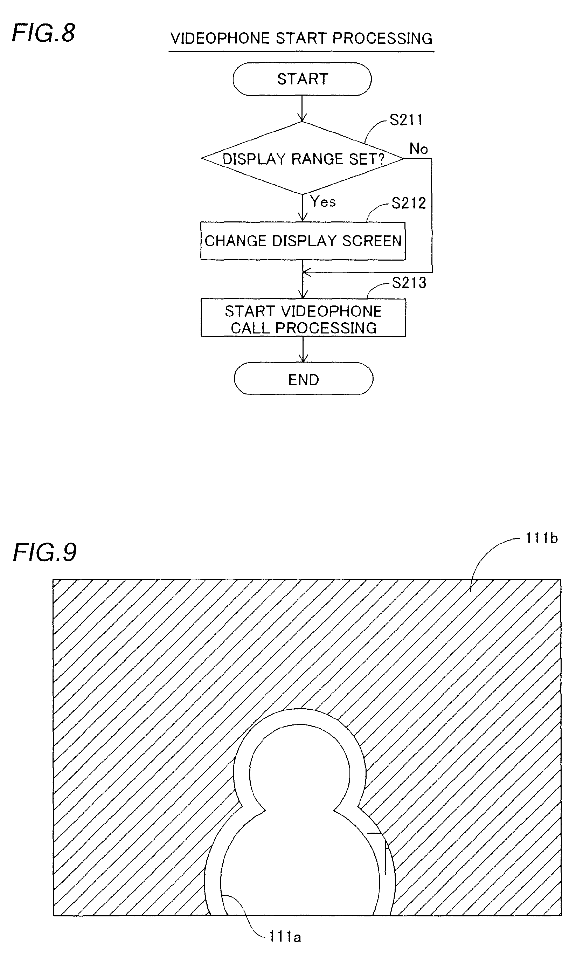

The videophone start processing at each of the steps S21 and S41 shown in Fig. 7 is now described with reference to Fig. 8. The control portions 121 and 221 of the users 1 and 2 similarly execute the videophone start processing.

At a step S211, the control portion 121 (221) determines whether or not the display range is set. More specifically, the control portion 121 (221) determines whether or not the flash ROM 114 (214) stores the frame 111b associated with the telephone number of the other party through the aforementioned display range set processing (see Fig. 4). The control portion 121 (221) determines that the display range is set if the flash ROM 114 (214) stores the corresponding frame 111b, and determines that the display range is not set if the flash ROM 114 (214) does not store the corresponding frame 111b.

If the display range is set, the control portion 121 (221) changes the display screen at a step S212. More specifically, the control portion 121 (221) controls the image processing portion 121a (221a) to overlap the corresponding frame in the flash ROM 114 (214) on the image acquired by the imaging portion 119 (211). In the case shown in Figs. 5 and 6 employed for describing the aforementioned display range set processing (see Fig. 4), for example, the frame 111b covers up the background of the acquired image so that the display portion 111 (211) displays only the image of the user 1 (2), as shown in Fig. 9. Thus, the user 1 (2) can set the low-resolution image (optimized image) acquired by the imaging portion 119 (219) and transmitted to the other party during the phone call through the aforementioned videophone call processing (see Fig. 3) to the specified display range.

If no display range is set, on the other hand, the control portion 121 (221) advances to a step S213 without changing the display screen. At the step S213, the control portion 121 (221) starts the aforementioned videophone call processing (see Fig. 3). The control portion 121 (221) continuously executes the videophone call processing until videophone termination processing is performed at a step S28 (S48) shown in Fig. 7.

When the videophone start processing shown in Fig. 8 is terminated, the control portion 121 of the user 1 determines whether or not the user 1 has pressed an image transmission available/unavailable button (not shown) displayed on the display portion 111 at a step S22 shown in Fig. 7, and shifts to a step S27 if the user 1 has not pressed the image transmission available/unavailable button. The user 1 presses the image transmission available/unavailable button displayed on the display portion 111 when he/she requests the low-resolution image of low picture quality acquired by the imaging portion 219 of the other party (user 2) and displayed on his/her display portion 111 as a high-resolution image of high picture quality. When the user 1 presses the image transmission available/unavailable button, the control portion 121 transmits an image transmission available/unavailable signal to the digital photo frame 200 of the other party (user 2) through the wireless network communication portion 116a at a step S23.

When the videophone start processing shown in Fig. 8 is terminated, the control portion 221 of the user 2 determines whether or not the image transmission available/unavailable signal has been received at a step S42, and shifts to a step S47 if no image transmission available/unavailable signal has been received. If the image transmission available/unavailable signal is received through the wireless network communication portion 216a, the control portion 221 determines whether or not the user 2 has pressed a transmission authorization button (not shown) displayed on the display portion 211 at a step S43. The user 2 presses the transmission authorization button displayed on the display portion 211 when the high-resolution image of high picture quality acquired by his/her imaging portion 219 may be transmitted to the other party (user 1). If the user 2 presses the transmission authorization button, the control portion 221 transmits the transmission authorization signal to the digital photo frame 100 through the wireless network communication portion 216a at a step S44. If the user 2 does not press the transmission authorization button, on the other hand, the control portion 221 shifts to the step S47. The display portion 211 is an example of the "authorization acceptance portion" in the present invention.

The control portion 121 of the user 1 determines whether or not the transmission authorization signal has been received at a step S24, and shifts to the step S27 if no transmission authorization signal has been received. If the transmission authorization signal is received, the control portion 121 determines whether or not the user 1 has pressed an image request button displayed on the display portion 111 at a step S25. The user 1 presses the image request button at prescribed timing while observing the image acquired by the imaging portion 219 of the other party (user 2) and displayed on his/her display portion 111. The control portion 121 shifts to the step S27 if the user 1 does not press the image request button. If the user 1 presses the image request button, on the other hand, the control portion 121 transmits an image request signal to the digital photo frame 200 of the other party (user 2) through the wireless network communication portion 116a at a step S26.

The control portion 221 of the user 2 determines whether or not the image request signal has been received at a step S45, and shifts to the step S47 if no image request signal has been received. If the image request signal is received through the wireless network communication portion 216a, the control portion 221 preserves the high-resolution image acquired by the imaging portion 219 in the flash ROM 214 at a step S46. In other words, the image processing portion 221a does not convert the high-resolution image of high picture quality stored in the flash ROM 214 to a low-resolution image of low picture quality.

Thereafter the control portions 121 and 221 of the users 1 and 2 determine whether or not the users 1 and 2 have made videophone termination instructions at the steps S27 and S47 respectively. More specifically, the control portion 121 (221) determines whether or not the user 1 (2) brings the videophone function of the digital photo frame 100 (200) into the on-hook state (line cutoff instruction state), and returns to the step S22 (S42) if the user 1 (2) does not bring the videophone function into the on-hook state (if the videophone function is continuously kept in the off-hook state (line connection instruction state)). If the user 1 (2) brings the videophone function of the digital photo frame 100 (200) into the on-hook state, the control portion 121 (221) executes the videophone termination processing at the step S28 (S48).

More specifically, the control portion 121 (221) terminates the aforementioned videophone call processing (see Fig. 3). Thus, the control portion 121 (221) switches the phone call state transmitting the voice signal received from the user 1 (2) and the optimized image to the other party to a state terminating the videophone call.

After terminating the videophone call processing, the control portion 121 of the user 1 transmits a transmission request signal for the high-resolution image of high picture quality corresponding to the image request signal transmitted during the phone call to the digital photo frame 200 of the other party (user 2) through the wireless network communication portion 116a at a step S29.

The control portion 221 of the user 2 determines whether or not the transmission request signal has been received at a step S49 after terminating the videophone call processing, and repeats this determination until the transmission request signal is received. If the transmission request signal is received through the wireless network communication portion 216a, the control portion 221 transmits the high-resolution image of high picture quality preserved in the flash ROM 214 at the step S46 to the digital photo frame 100 of the other party (user 1) through the wireless network communication portion 216a at a step S50. Then, the control portion 221 determines whether or not the image transmission has been terminated at a step S51, and repeats the operations at the steps S50 and S51 until the image transmission is terminated.

The control portion 121 of the user 1 receives the high-resolution image of high picture quality transmitted from the other party (user 2) through the wireless network communication portion 116a at a step S30. Then, the control portion 121 determines whether or not the image is completely received at a step S31, and repeats the operations at the steps S30 and S31 until the image is completely received.

If the image is completely received and transmitted by and from the users 1 and 2 respectively, the communication session between the digital photo frames 100 and 200 is terminated. If no image request signal is transmitted during the phone call, the users 1 and 2 terminate the communication session without receiving and transmitting the high-resolution image.

According to the first embodiment, as hereinabove described, the digital photo frame 200 is provided with the control portion 221 transmitting the image corresponding to the image request signal to the digital photo frame 100 of the other party after the phone call to the other party is terminated when receiving the image request signal transmitted from the digital photo frame 100 of the other party through the wireless network communication portion 216a during the phone call so that the control portion 221 transmits the image requested by the other party after the phone call to the other party is terminated, whereby the control portion 221 can transmit the image requested by the other party without increasing the quantity of information transmitted during the phone call. Consequently, the control portion 221 can transmit the image requested by the other party while suppressing inconvenience caused in the videophone call processing during the phone call.

According to the first embodiment, the control portion 221 of the digital photo frame 200 converts the high-resolution image acquired by the imaging portion 219 of the digital photo frame 200 to a low-resolution image through the image processing portion 221a and transmits the low-resolution image to the digital photo frame 100 of the other party during the phone call to the other party (digital photo frame 100), and transmits the high-resolution image, acquired by the imaging portion 219, corresponding to the image request signal to the digital photo frame 100 of the other party after the phone call to the other party is terminated when receiving the image request signal with respect to an image acquired by the imaging portion 219 during the phone call. Thus, the control portion 221 can transmit the image requested by the other party and acquired by the imaging portion 219 as the high-resolution image of high picture quality while suppressing inconvenience caused in the videophone processing during the phone call.

According to the first embodiment, the flash ROM 214 of the digital photo frame 200 stores the high-resolution image, acquired by the imaging portion 219, corresponding to the image request signal and the control portion 221 of the digital photo frame 200 transmits the high resolution image acquired by the imaging portion 219 and stored in the flash ROM 214 to the digital photo frame 100 of the other party after the phone call to the other party is terminated when the control portion 221 receives the image request signal with respect to the image acquired by the imaging portion 219 from the other party during the phone call to the other party (digital photo frame 100). Thus, the control portion 221 can easily transmit the high-resolution image of high picture quality acquired by the imaging portion 219 to the other party by reading the high-resolution image, acquired by the imaging portion 219, requested by the other party from the flash ROM 214.

According to the first embodiment, the display portion 111 (211) of the digital photo frame 100 (200) accepts display range limit information about the image displayed on the display portion 211 (111) of the other party and the image processing portion 121a (221a) processes the image acquired by the imaging portion 119 (219) so that the display portion 111 (211) displays the image in the accepted display range while the control portion 121 (221) transmits the image processed by the imaging portion 121a (221a) to the other party during the phone call. Thus, the control portion 111 (211) transmits the image to the other party in the state where the display range thereof is limited, whereby the user 1 (2) can keep an inconvenient portion, not to be seen by the other party, of the image acquired by the imaging portion 119 (219) unobserved.

According to the first embodiment, the display portion 111 (211) accepts the display range limit information through the touch panel function thereof, whereby the user 1 (2) can easily specify the display range through the easily operable touch panel function.

According to the first embodiment, the display portion 111 (211) accepts the display range limit information responsive to the person on the other end of the phone and the control portion 121 (211) transmits the image of the display range, responsive to the person on the other end of the phone, accepted by the display portion 111 (211) to the other party during the phone call, whereby the user 1 (2) can properly keep an inconvenient portion, not to be seen by the other party, of the image acquired by the imaging portion 119 (219) unobserved, also when the inconvenient portion not to be seen varies with the person on the other end of the phone.

According to the first embodiment, the control portion 121 of the digital photo frame 100 transmits the image transmission available/unavailable signal to the digital photo frame 200 through the wireless network communication portion 116a for inquiring of the user 2 of the digital photo frame 200 about availability/unavailability of transmission of the high-resolution image to the digital photo frame 100 when transmitting the image request signal to the digital photo frame 200 on the basis of the operation of the user 1 of the digital photo frame 100. Then, the control portion 121 accepts authorization information authorizing transmission of the high-resolution image from the user 2 of the digital photo frame 200 when the display portion 211 of the digital photo frame 200 receives the image transmission available/unavailable signal transmitted from the digital photo frame 100 through the wireless network communication portion 216a, while the control portion 221 of the digital photo frame 200 does not transmit the high-resolution image corresponding to the image request signal to the digital photo frame 100 when no authorization information from the user 2 is accepted. Thus, the control portion 221 does not transmit the high-resolution image requested by the other party (digital photo frame 100) unless the user 2 of the digital photo frame 200 authorizes the transmission of the high-resolution image, whereby the control portion 221 can be prevented from transmitting the high-resolution image requested by the other party against the will of the user 2 of the digital photo frame 200 if the user 2 does not wish to transmit the image requested by the other party to the other party.

According to the first embodiment, the SLIC 120 (220) of the digital photo frame 100 (200) transmits/receives the voice signal to/from the analog telephone connected thereto and the control portion 121 (221) synchronizes the timing of the voice signal input through the analog telephone with that of the image, acquired by the imaging portion 119 (219), corresponding to the voice signal, whereby the user 1 (2) can make the phone call to the other party in a state where the voice and the image are in timing synchronization with each other also when employing the analog telephone for the videophone call.

According to the first embodiment, the control portion 121 (211) transmits the transmission request signal to the digital photo frame 200 (100) through the wireless network communication portion 116a (216a) when the control portion 221 (121) transmits the image corresponding to the image request signal to the digital photo frame 100 (200) after the phone call to the digital photo frame 100 (200) is terminated and the control portion 221 (121) transmits the image corresponding to the image request signal to the digital photo frame 100 (200) through the wireless network communication portion 216a (116a) after the digital photo frame 200 (100) receives the transmission request signal. Thus, the control portion 221 (121) can reliably transmit the image corresponding to the image request signal also after the phone call is terminated.

According to the first embodiment, the control portion 121 (221) determines whether or not the image corresponding to the image request signal transmitted from the digital photo frame 200 (100) is completely received and terminates the phone call to the digital photo frame 200 (100) when the image is completely received. Thus, the control portion 121 (221) can terminate the phone call after entirely receiving the requested image.

### (Second Embodiment)

A second embodiment of the present invention is now described. A videophone system 1 according to the second embodiment transmits an open image consisting of a high-resolution image of high picture quality in response to a request by the other party, dissimilarly to the aforementioned first embodiment.

A flash ROM 114 (214) of a digital photo frame 100 (200) according to the second embodiment of the present invention stores open images consisting of high-resolution images of high picture quality to be opened to a person on the other end of the phone. The open images have been read from various media through a media connection portion 113 (213). A user 1 (2) can also store the open images in open folders varied with genres in the flash ROM 114 (214).

According to the second embodiment, a control portion 121 (221) is formed to perform open image transmission processing by running a computer program (not shown). In the open image transmission processing, the control portion 121 (221) transmits an open image, requested by the other party, among the open images opened to the other party during a phone call. An image processing portion 121a (221a) of the control portion 121 (221) has a function of converting the open images consisting of the high-resolution images of high picture quality stored in the flash ROM 114 (214) to thumbnail images consisting of low-resolution images of low picture quality. The thumbnail images are examples of the "list" in the present invention.

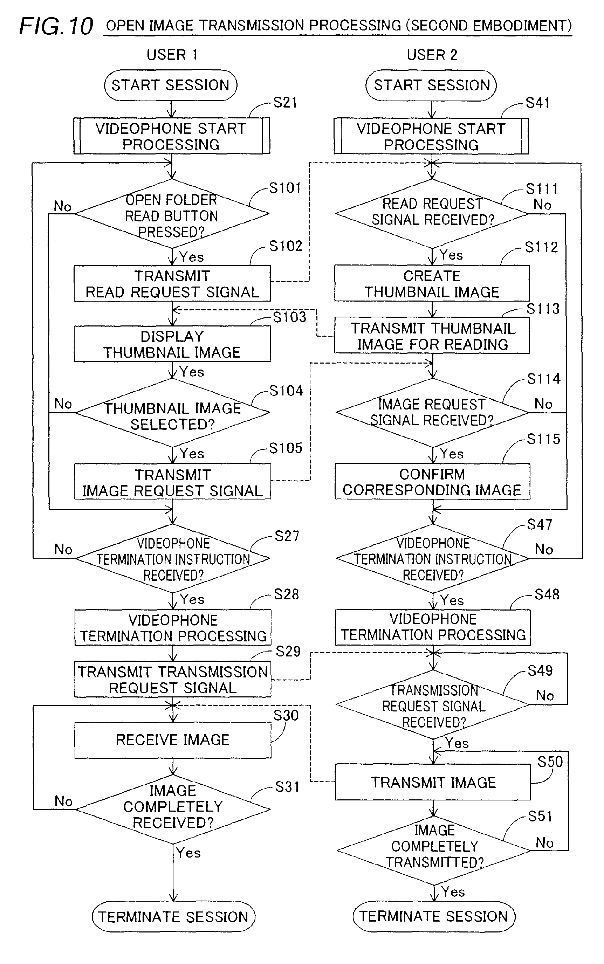

The open image transmission processing of the videophone system 1 according to the second embodiment of the present invention is now described with reference to Figs. 10 to 12. In the following description, it is assumed that the flash ROM 214 of the user 2 stores the open images. Operations similar to those in the acquired image transmission processing according to the aforementioned first embodiment shown in Fig. 7 are denoted by the same step numbers in a flow chart of the open image transmission processing shown in Fig. 10, and redundant description is not repeated.

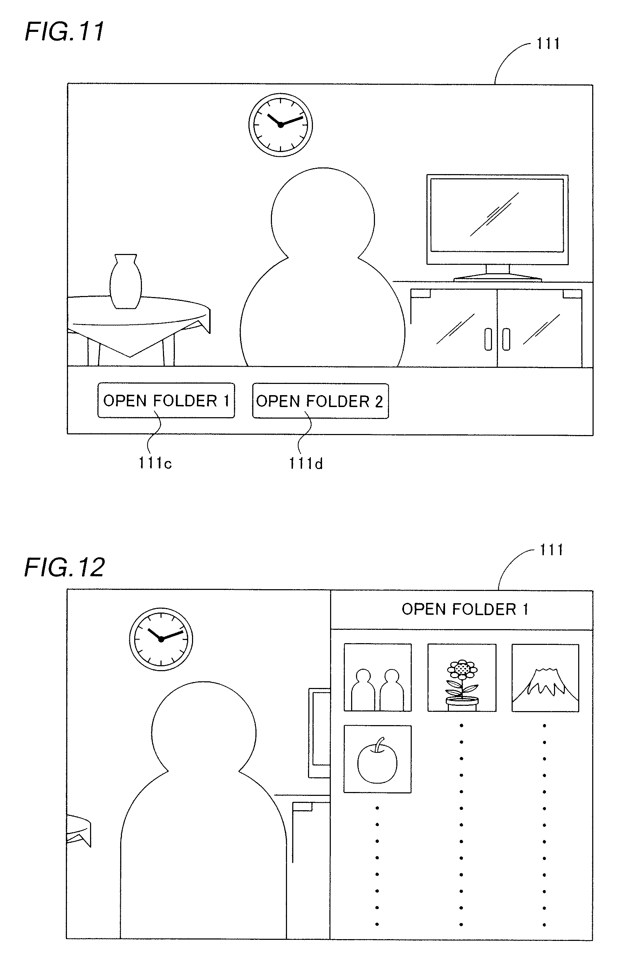

After videophone start processing at a step S21 is terminated, the control portion 121 of the user 1 determines whether or not the user 1 has pressed any open folder read button (not shown) displayed on a display portion 111 at a step S101. More specifically, the display portion 111 of the user 1 displays open folder read buttons 111c and 111d during a phone call as shown in Fig. 11, if the flash ROM 214 of the user 2 stores the open images. The display portion 111 displays the open folder read buttons 111c and 111d in response to the number of open folders in the flash ROM 214 of the user 2. If the flash ROM 214 of the user 2 stores no open images, the display portion 111 of the user 1 displays no open folder read buttons. The user 1 presses the open folder read button corresponding to a desired folder when he/she wishes to read any open image of the user 2. When the user 1 presses the open folder read button, the control portion 121 transmits a read request signal to the digital photo frame 200 of the other party (user 2) through a wireless network communication portion 116a at a step S102.

On the other hand, the control portion 221 of the user 2 (other party) determines whether or not the read request signal has been received at a step S111 after videophone start processing at a step S41 is terminated, and shifts to a step S47 if no read request signal has been received. If the read request signal is received through a wireless network communication portion 216a, on the other hand, the control portion 221 creates thumbnail images at a step S112. More specifically, the control portion 221 controls the image processing portion 221a to convert the open images, consisting of the high-resolution images of high picture quality, stored in the folder corresponding to the open folder read button pressed by the user 1 to the thumbnail images consisting of low-resolution images. Thus, the image size is reduced, whereby the quantity of information transmitted to the other party during the phone call is reduced. In the processing of creating the thumbnail images, the image processing portion 221a copies the corresponding open images consisting of the high-resolution images of high picture quality and converts the copies to the thumbnail images consisting of the low-resolution images of low picture quality, and hence the original open images consisting of the high-resolution images of high picture quality remain in the folder. Then, the control portion 221 transmits the created thumbnail images to the digital photo frame 100 of the other party (user 1) through the wireless network communication portion 216a.

The control portion 121 of the user 1 displays the thumbnail images received from the other party (user 2) on the display portion 111 at a step S103. More specifically, the display portion 111 displays an image acquired by an imaging portion 219 of the other party (user 2) on the left half of a display region thereof, and lists the thumbnail images in the corresponding folder on the right half of the display region, as shown in Fig. 12. Thereafter the control portion 121 determines which thumbnail image the user 1 has selected at a step S104. If the listed thumbnail images include an image to be requested as a high-resolution image of high picture quality, the user 1 selects the corresponding one of the thumbnail images displayed on the display portion 111. At this time, the user 1 can also select a plurality of thumbnail images. The control portion 121 shifts to a step S27 if the user 1 selects none of the thumbnail images, or transmits an image request signal to the digital photo frame 200 of the other party (user 2) through the wireless network communication portion 1116a at a step S105 if the user 1 selects any of the thumbnail images.

The control portion 221 of the user 2 (other party) determines whether or not the image request signal has been received at a step S114, and shifts to the step S47 if no image request signal has been received. If the image request signal is received through the wireless network communication portion 216a, on the other hand, the control portion 221 confirms the open image, consisting of the high-resolution image of high picture quality, corresponding to the thumbnail image selected by the user 1 at a step S115.

Then, the control portion 121 (221) perform videophone termination processing at steps S27 (S47) and S28 (S48), thereafter receives (transmits) the corresponding open image consisting of the high-resolution image of high picture quality through an operation similar to that in the acquired image transmission processing according to the aforementioned first embodiment, and terminates the communication session between the digital photo frames 100 and 200. If no image request signal has been transmitted during the phone call, both of the users 1 and 2 terminate the communication session without receiving/transmitting the high-resolution image of high picture quality after the videophone termination processing.

The remaining structure of the second embodiment is similar to that of the aforementioned first embodiment.

According to the second embodiment, as hereinabove described, the flash ROM 214 of the digital photo frame 200 stores the open images consisting of the high-resolution images to be opened to the digital photo frame 100. The control portion 221 of the digital photo frame 200 controls the image processing portion 221a to convert the open images, consisting of the high-resolution images, stored in the flash ROM 214 to the low-resolution images and transmits the same to the digital photo frame 100 of the other party in response to the read request for the open images during the phone call to the other party (digital photo frame 200), and transmits the open image consisting of the high-resolution image, corresponding to the image request signal, stored in the flash ROM 214 to the digital photo frame 100 of the other party after the phone call to the other party is terminated when receiving the image request signal from the other party for at least part of the read open images during the phone call. Thus, the control portion 221 can read the open images consisting of the high-resolution images requested by the other party from the flash ROM 214 and easily transmit the open images consisting of the high-resolution images of high picture quality to the other party while suppressing increase in the quantity of transmitted information by transmitting the open images converted to the low-resolution images of low picture quality during the phone call.

According to the second embodiment, the display portion 111 (211) displays the open images, converted to the low-resolution images, transmitted from the digital photo frame 200 (100) as the thumbnail images. Thus, the display portion 111 (211) displays the open images converted to the low-resolution images as the thumbnail images, whereby the open images converted to the low-resolution images can be easily observed.

The remaining effects of the second embodiment are similar to those of the aforementioned first embodiment.

Although the present invention has been described and illustrated in detail, it is clearly understood that the same is by way of illustration and example only and is not to be taken by way of limitation, the spirit and scope of the present invention being limited only by the terms of the appended claims.

For example, while each of the aforementioned first and second embodiments has shown the digital photo frames having the videophone function as the examples of the first and second telephone communication apparatuses respectively, the present invention is not restricted to this, but electronic apparatuses other than the digital photo frames may alternatively be employed as examples of the first and second telephone communication apparatuses respectively so far as the same have videophone functions. In this case, different types of electronic apparatuses having videophone functions may be employed as the examples of the first and second telephone communication apparatuses respectively.

While each of the telephone communication apparatuses is formed to be capable of transmitting the high-resolution image(s) requested by the other party in each of the aforementioned first and second embodiments, the present invention is not restricted to this, but only either one of the telephone communication apparatuses may be formed to be capable of transmitting the high-resolution image(s) requested by the other party (other telephone communication apparatus). In this case, the other telephone communication apparatus may be formed to be capable of transmitting the image request signal.

While the control portions are formed to be capable of executing the acquired image transmission processing in the aforementioned first embodiment and formed to be capable of executing the open image transmission processing in the aforementioned second embodiment, the present invention is not restricted to this, but the control portions may alternatively be formed to be capable of executing both of the acquired image transmission processing and the open image transmission processing in the same communication session.

While the user specifies the display range by tracing the surface of the display portion with his/her finger through the touch panel function in each of the aforementioned first and second embodiments, the present invention is not restricted to this, but the storage portion may alternatively previously store frames of predefined display ranges so that the user specifies the display range by selecting any of the frames from the storage portion. In this case, the predefined display ranges may be formed by such a circular display range that only the face of the user is displayable at the center of the display region of the display portion, such a display range that only the upper half of the display region of the display portion is displayable, and the like.

While both of the digital photo frames 100 and 200 are provided with the SLICs 120 and 220 and the voice input/output portions 118 and 218 having the microphone functions and the speaker functions in each of the aforementioned first and second embodiments, the present invention is not restricted to this, but the telephone communication apparatuses may alternatively be provided with no voice input/output portions, so far as the same include analog telephone communication portions such as SLICs to which analog telephones are connectable.

While the control portion 121 (221) transmits the image request signal only once during the phone call in each of the aforementioned first and second embodiments, the present invention is not restricted to this, but the control portion 121 (221) may alternatively transmit the image request signal a plurality of times during the phone call when requesting a plurality of high-resolution images.

While both of the digital photo frames 100 and 200 serving as the first and second telephone communication apparatuses respectively are provided with the display portions 111 and 211 functioning as display range acceptance portions and the image processing portions 121a and 221a processing images to be in the display ranges specified by the users 1 and 2 respectively in each of the aforementioned first and second embodiments, the present invention is not restricted to this, but only one of the first and second telephone communication apparatuses may alternatively be provided with a display range acceptance portion and an image processing portion.

While both of the digital photo frames 100 and 200 serving as the first and second telephone communication apparatuses respectively are provided with the SLICs 120 and 220 serving as the analog telephone communication portions in each of the aforementioned first and second embodiments, the present invention is not restricted to this, but only one of the first and second telephone communication apparatuses may alternatively be provided with an analog telephone communication portion.

While no image request signal is transmitted from the other party if the user does not press the transmission authorization button in the aforementioned first embodiment, the present invention is not restricted to this, but the other party may alternatively be capable of transmitting the image request signal even if the user does not press the transmission authorization button, so far as the digital photo frame does not transmit the image corresponding to the image request signal if the user does not press the transmission authorization button.

While the display portion of the other party displays the open folder read buttons when the flash ROM serving as the storage portion stores the open images in the aforementioned second embodiment, the present invention is not restricted to this, but the display portion may alternatively not display the open folder read buttons in response to the person on the other end of the phone even if the flash ROM stores the open images. In this case, open images opened to only a prescribed person on the other end of the phone may be previously set.

## Claims

1. A videophone system (1) comprising:
a first telephone communication apparatus (100) including a first imaging portion (119), a first communication portion (116a), a first display portion (111) and a first control portion (121) and having a videophone function enabling a user to make a phone call while displaying an image of the other party on said first display portion; and
a second telephone communication apparatus (200) including a second imaging portion (219), a second communication portion (216a), a second display portion (211) and a second control portion (221) and having a videophone function enabling a user to make a phone call while displaying an image of the other party on said second display portion, wherein
said first control portion of said first telephone communication apparatus is formed to transmit an image request signal requesting said second telephone communication apparatus to transmit an image to said second telephone communication apparatus through said first communication portion on the basis of an operation of said user, and
said second control portion of said second telephone communication apparatus is formed to transmit said image to be displayed on said first display portion of said first telephone communication apparatus through said second communication portion during a phone call to said first telephone communication apparatus, and to transmit said image corresponding to said image request signal after said phone call to said first telephone communication apparatus is terminated when said second communication portion receives said image request signal transmitted from said first telephone communication apparatus during said phone call.

2. The videophone system according to claim 1,
wherein
said second telephone communication apparatus further includes a resolution conversion portion (221a) converting resolution of an image from high resolution to low resolution, and
said second control portion of said second telephone communication apparatus is formed to transmit a low-resolution image converted to low resolution by said resolution conversion portion to said first telephone communication apparatus during said phone call to said first telephone communication apparatus, and to transmit a high-resolution image not yet converted by said resolution conversion portion to said first telephone communication apparatus after said phone call to said first telephone communication apparatus is terminated when receiving said image request signal.

3. The videophone system according to claim 2,
wherein
said second control portion of said second telephone communication apparatus is formed to convert a high-resolution image acquired by said second imaging portion of said second telephone communication apparatus to a low-resolution image by said resolution conversion portion and to transmit said low-resolution image to said first telephone communication apparatus during said phone call to said first telephone communication apparatus, and to transmit a high-resolution image, corresponding to said image request signal, acquired by said second imaging portion to said first telephone communication apparatus after said phone call to said first telephone communication apparatus is terminated when receiving said image request signal with respect to an image acquired by said second imaging portion during said phone call.

4. The videophone system according to claim 2,
wherein
said second telephone communication apparatus further includes a storage portion (214) storing a high-resolution image, and
said second control portion of said second telephone communication apparatus is formed to transmit said high-resolution image stored in said storage portion to said first telephone communication apparatus after said phone call to said first telephone communication apparatus is terminated when receiving said image request signal.

5. The videophone system according to claim 4,
wherein
said storage portion of said second telephone communication apparatus stores said high-resolution image, corresponding to said image request signal, acquired by said second imaging portion, and
said second control portion of said second telephone communication apparatus is formed to transmit said high-resolution image acquired by said second imaging portion and stored in said storage portion to said first telephone communication apparatus after said phone call to said first telephone communication apparatus is terminated when receiving said image request signal with respect to an image acquired by said second imaging portion from said first telephone communication apparatus during said phone call to said first telephone communication apparatus.

6. The videophone system according to claim 4,
wherein
said storage portion of said second telephone communication apparatus stores an open image consisting of a high-resolution image to be opened to said first telephone communication apparatus, and
said second control portion of said second telephone communication apparatus is formed to convert said open image consisting of said high-resolution image stored in said storage portion to a low-resolution image by said resolution conversion portion and to transmit said low-resolution image to said first telephone communication apparatus during said phone call to said first telephone communication apparatus in response to a read request for said open image, and to transmit said open image consisting of said high-resolution image, corresponding to said image request signal, stored in said storage portion to said first telephone communication apparatus after said phone call to said first telephone communication apparatus is terminated when receiving said image request signal from said first telephone communication apparatus with respect at least part of read said open image during said phone call.

7. The videophone system according to claim 6,
wherein
said first display portion is formed to list said open image, converted to said low-resolution image, transmitted from said second telephone communication apparatus.

8. The videophone system according to claim 1,
wherein
at least either said first telephone communication apparatus or said second telephone communication apparatus includes a display range acceptance portion (211) and an image processing portion (221a),
said display range acceptance portion is formed to accept limit information for a display range of said image displayed on corresponding said first or second display portion,
said image processing portion is formed to process an image acquired by said first imaging portion or said second imaging portion so that said image is displayed in said display range accepted by said display range acceptance portion, and
said first control portion or said second control portion is formed to transmit said image processed by said image processing portion to the other party during said phone call in at least said first telephone communication apparatus or said second telephone communication apparatus including said display range acceptance portion and said image processing portion.

9. The videophone system according to claim 8,
wherein
said display range acceptance portion is constituted of said first display portion or said second display portion having a touch panel function and formed to accept said limit information for said display range through said touch panel function.

10. The videophone system according to claim 8,
wherein
said display range acceptance portion is formed to accept said limit information for said display range responsive to a person on the other end of the phone, and
said first display portion or said second display portion is formed to transmit an image of said display range, accepted by said display range acceptance portion, responsive to said person on the other end of the phone to the other party during said phone call in at least said first telephone communication apparatus or said second telephone communication apparatus including said display range acceptance portion and said image processing portion.

11. The videophone system according to claim 1,
wherein
said first control portion of said first telephone communication apparatus is formed to transmit a transmission available/unavailable signal, inquiring of said user of said second telephone communication apparatus about availability/unavailability of transmission of an image to said first telephone communication apparatus, to said second telephone communication apparatus through said first communication portion when transmitting said image request signal to said second telephone communication apparatus on the basis of said operation of said user of said first telephone communication apparatus,
said second telephone communication apparatus further includes an authorization acceptance portion accepting authorization information authorizing said transmission of said image from said user of said second telephone communication apparatus when said second communication portion receives said transmission available/unavailable signal transmitted from said first telephone communication apparatus, and
said second control portion of said second telephone communication apparatus is formed not to transmit said image corresponding to said image request signal to said first telephone communication apparatus when said authorization acceptance portion does not accept said authorization information from said user.

12. The videophone system according to claim 1,
wherein
at least either said first telephone communication apparatus or said second telephone communication apparatus further includes an analog telephone communication portion (120, 220) so formed that an analog telephone (220a) is connectable thereto while transmitting/receiving a voice signal to/from connected said analog telephone, and
said first control portion or said second control portion is formed to synchronize the timing of said voice signal input through said analog telephone with that of an image, corresponding to said voice signal, acquired by said first imaging portion or said second imaging portion in at least said first telephone communication apparatus or said second telephone communication apparatus including said analog telephone communication portion.

13. The videophone system according to claim 1, so formed that said first control portion transmits a transmission request signal to said second telephone communication apparatus through said first communication portion when said second control portion transmits said image corresponding to said image request signal to said first telephone communication apparatus after said phone call to said first telephone communication apparatus is terminated and said second control portion transmits said image corresponding to said image request signal to said first telephone communication apparatus through said second communication portion after said second telephone communication apparatus receives said transmission request signal.

14. The videophone system according to claim 13,
wherein
said first control portion is formed to determine whether or not said image, corresponding to said image request signal, transmitted from said second telephone communication apparatus is completely received and to terminate the communication with said second telephone communication apparatus when said image request signal is completely received.

15. The videophone system according to claim 1,
wherein
said first telephone communication apparatus and said second telephone communication apparatus are digital photo frames.
